# EUROPEAN PATENT APPLICATION

(11) **EP 2 774 961 A1**
(43) Date of publication of application: **10.09.2014**
(21) Application number: 12822880.6
(22) Date of filing: 09.08.2012
(51) Int. Cl.: C09D 9/00

(54) **STRIPPING COMPOSITIONS, COMPOSITIONS THAT ARE PRECURSORS THEREOF, A METHOD FOR THE "IN SITU" PREPARATION THEREOF, AND THE USE THEREOF FOR STRIPPING PAINTS, VARNISHES AND LACQUERS**

(30) Priority: 11.08.2011 ES 201231380 P
(71) Applicant: Universidad de Granada, 18071 Granada (ES); Tino Stone Group, S.A., 04867 Macael (Almeria) (ES)
(72) Inventor: JURADO ALAMEDA, Encarnación, E-18071 Granada (ES); BRAVO RODRÍGUEZ, Vicente, E-18071 Granada (ES); BAILÓN MORENO, Rafael, E-18071 Granada (ES); CHIADMI GARCIA, Laila, E-18071 Granada (ES)
(74) Representative: Carpintero Lopez, Francisco
(86) International application number: PCT/ES2012/070618
(87) International publication number: WO 2013/021090

(57) **Abstract**

A stripping composition for paints, varnishes and lacquers, comprising
15% to 85% by weight of a solvent component, the solvent component being selected from apolar hydrocarbons with between 5 and 15 carbon atoms, the molecules of which do not have oxygen, nitrogen, sulfur or other polarizing atoms, and which have dielectric constants (K) of around 3, aromatic hydrocarbons that are harmful to health being expressly excluded;
15% to 85% by weight of water;
0%-50% by weight of a surfactant component;
0% to 10% by weight of an evaporation-adjusting hygroscopic component;
an auxiliary component in a weight percentage such that when present, the stripping composition is made up to 100%.

The above-mentioned stripping composition may be obtained by mixing the anhydrous precursor composition comprising all the components with the exception of water.

## Description

### Technical Field of the Invention

The present invention is comprised in the field of chemistry, specifically in the technical field of stripping agents for paints, varnishes and lacquers.

### Background of the Invention

Stripping agent for paints, varnishes and lacquers is understood to be a composition the function of which is to help eliminate by dissolving, swelling, detachment or other similar effects, layers of paint, varnishes and lacquers from various supports such as metal, wood, stone, plastics, etc.

Regulations concerning the marketing of paints, varnishes and lacquers today establish that such products must be water-based, not solvent-based, for environmental and user safety reasons. This also entails modifying the physicochemical characteristics of the polymers forming these products, and therefore also leads to redesigning stripping compositions removing them from surfaces.

There are two fundamental types of stripping agents: alkali-based stripping agents the stripping capacity of which depends on a high pH, and solvent-based stripping agents.

Solvent-based stripping compositions the majority component of which, or the very relevant component of which at least percentage-wise, is water, have recently been considered. The advantage, besides the environmental improvement, of the non-inflammability and the non-explosive nature of the stripping agent, is the decrease in costs of the end product, because water is a very low-cost solvent. Likewise, introducing water allows constructing products in many various forms, such as emulsions, microemulsions, gels, etc., and therefore modifying their rheological properties almost at will.

In this sense patent US-5597788 is a first attempt at this approach because although the compositions it proposes essentially consist of conjugated terpenes and/or related polyenes in combination with alcohols, such as benzyl alcohol or the phenyl-substituted derivatives thereof, some of them can be used after being dispersed in water when they are going to be used. Nevertheless, they are not water-based compositions strictly speaking.

In contrast, patent application ES 2 227 678 is an example describing water-based compositions and benzyl alcohol for removing paints from objects by immersion in these compositions. In this case, although a surface-active agent is used as an auxiliary component, said surface-active agent must be in small amounts to prevent the formation of an actual emulsion. Paint can be removed by bathing at ambient temperature or under hot conditions between 40 and 90°C. Acid, alkali and oxidizer activators which help the non-emulsified aqueous and solvent phases act as effectively as if they were actually emulsified are also described. Hydrogen peroxide is referenced therein as the preferred activator, just as it also is in patent ES 2 227 834, but it has the drawback of chemical instability.

The compositions described in patent application ES 2 163 112, where benzyl alcohol and dimethyl sulfoxide mixtures dispersed or emulsified in about 80% water, are very interesting. In most of the compositions, to remove paint it was necessary to immerse the painted material in a bath containing the stripping agent heated at 50°C and with stirring. In order to work at ambient temperature and without needing complete immersion, activators are introduced in the compositions, in addition to a CARBOPOL^{®}-based thickener, the most effective activator being a mixture of triethanolamine (TEA) and formic acid. Nevertheless, these compositions have only proven their efficacy with polyester lacquers and on phosphated steel plates. Another type of less polar paints and more porous supports are not described. One drawback is the presence of very high amounts of dimethyl sulfoxide. Dimethyl sulfoxide has the property of penetrating through the epidermis and the cell membranes acting like a vector for other substances that could be harmful to health, such as paint residues and residues of other components of the composition of the stripping agent. Therefore, an excess of this component could give rise to this problem.

Patent application ES 2 316 013 relates to a water-based stripping agent for removing organic materials from various surfaces such as concrete, brick, as well as wood or metals. The proposed compositions contain, besides over 50% by weight of water, a somewhat complex mixture of various solvents (dibasic ester, diacetone alcohol, benzyl acetate and dimethyl sulfoxide), plus a thickener and an emulsifier.

Patent application ES 2 137 762 describes compositions of stripping agents based on anisole as a solvent, plus water and alternatively a thickener, a cosolvent and an emulsifier.

Patents US-5167853, US-5288335 and US-5468415 describe compositions of stripping agents for paint the fundamental component of which is n-methyl pyrrolidone, together with other terpene-based auxiliary solvents, such as limonene (dipentene), or solvents such as alkyl carbonates and glycols, as well as emulsifiers, thickeners and water.

As can be inferred from the foregoing, it can be said that the state of the art relating to water-based stripping compositions consists of using an active component or active components, solvents, which remove the paint by themselves, and the proportion of added water is such that the reduced layer of paint removal qualities do not prevent the composition from being sufficiently effective. As a result, the preferred active components are essentially apolar molecules but with a certain degree of polarity due to the presence of one or two slightly polarizing oxygen, nitrogen or sulfur atoms, such as benzyl alcohol-type alcohols and derivatives thereof, ethers, esters or pyrrolidone derivatives. These solvents are slightly water-soluble or very water-soluble.

When a large amount of water is added and the reduced stripping capacity drops below the minimum threshold for the composition to be considered effective, it is necessary to add an activator such as any of those described in the state of the art: certain alkalis, acids and oxidizers such as TEA, formic acid, hydrogen peroxide, etc.

The polarity of the solvents used is in accordance with the composition of current water-based paints, which are also somewhat more polar than the preceding solvent-based paints which were removed with very apolar stripping agents based, for example, in turpentine (turpentine essence), white spirit and other hydrocarbons. In general, completely apolar substances or substances with an extremely low polarity such as the latter substances are not suitable for directly removing layers of water-based paint, varnishes or lacquers.

### Description of the Invention

The object of the present invention is to overcome the drawbacks of the state of the art described above by means of stripping compositions, compositions that are precursors thereof, a method for the *"in situ"* preparation thereof, and the use thereof for stripping paints, varnishes and lacquers.

Therefore, the stripping composition for paints, varnishes and lacquers, according to the invention comprises a solvent component and water, and optionally at least one additional component selected from surfactant components, evaporation-adjusting hygroscopic components, auxiliary components, and combinations thereof, and characterized in that it comprises
- 5% to 85%, preferably 15% to 70%, by weight of the solvent component, the solvent component being selected from apolar hydrocarbons with between 5 and 15 carbon atoms, the molecules of which do not have oxygen, nitrogen, sulfur or other polarizing atoms, and which have dielectric constants (K) less than 3, aromatic hydrocarbons that are harmful to health being expressly excluded;
- 15% to 85% by weight of water;
- 0% to 50% by weight of the surfactant component;
- 0% to 15% by weight of the evaporation-adjusting hygroscopic component;
- at least one auxiliary component in a weight percentage such that when present, the stripping composition is made up to 100%.

In a preferred embodiment of the invention, the composition comprises
- 15% to 70% by weight of the solvent component;
- 30% to 85% by weight of water;
- 2% to 15% by weight of the surfactant component;
- 2% to 12% by weight of the evaporation-adjusting hygroscopic component.

In another even more preferred embodiment of the invention, the composition comprises
- 30% to 70% by weight of the solvent component;
- 30% to 70% by weight of water;
- 5% to 15% by weight of the surfactant component;
- 5% to 10% by weight of the evaporation-adjusting hygroscopic component.

According to the invention, the solvent component can be selected from saturated and unsaturated, cyclic and acyclic hydrocarbons, and combinations thereof, preferably from hydrocarbons with a hemiterpene, monoterpene and sesquiterpene structure, and more preferably from hydrocarbons selected from dipentene, limonene and combinations thereof. A hydrocarbon that is particularly preferred as the main hydrocarbon due to its advantageous ecotoxicological properties is natural pure limonene (D-limonene or R-(+) limonene) or limonene forming part of an essential oil containing it as the majority component, such as orange essential oil, mandarin essential oil, lemon essential oil, lime essential oil or an essential oil of any other citrus fruit or of any other essential oil that also contains it as the majority component, usually present in essential oils of flowers, stems, leaves and fruits. The structure of natural limonene, D-limonene, R-(+) limonene or dipentene is:

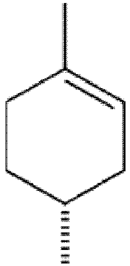

In addition to its ecotoxicological properties, limonene is also preferred because it is considered that it prevents cancer. See, for example, the article by Pamela L. Crowell entitled "Prevention and Therapy of Cancer by Dietary Monoterpenes", published in 1999 in the Journal of Nutrition, volume 129, pages 775-778. It can be accessed over the Internet at the following address: http://jn.nutrition.org/cgi/content/full/129/3/775S. The article by Hiroyuki et al. entitled "Cancer Prevention by Natural Compounds", published in 2004 in Drug Metabolism and Pharmacokinetics, volume 19, number 4, pages 245-263 can also be consulted. It can be accessed over the Internet at the following address: http://www.jstage.jst.go.jp/article/dmpk/19/4/245/_pdf.

Aromatic hydrocarbons that are harmful to health, such as the benzene, toluene, ethylbenzene, xylenes, benzopyrene and others considered as harmful, are expressly excluded.

It has surprisingly been found that contrary to what was expected in view of the state of the art, it is possible to formulate water-based stripping compositions for water-based paints, varnishes and lacquers containing as solvents having extreme apolarity with a dielectric constant (K) less than 3, completely water-insoluble hydrocarbons, such as terpene hydrocarbons and other non-terpene hydrocarbons, the molecules of which do not have oxygen, nitrogen, sulfur or other slightly polarizing atoms. These compositions are suitable for stripping surfaces of, for example, metal, polished stone, porous stone or wood, and any hard surface coated with water-based and also non water-based paints, varnishes and lacquers. Due to its chemical nature, the composition according to the invention does not negatively affect the stripped surface, being able to be repainted again if desired, and it is not explosive or inflammable, and is atoxic, non-irritating for the skin and airways, and it is safe in application and for the environment.

According to the invention, the surfactant component can be selected from anionic surfactants, cationic surfactants, amphoteric surfactants and combinations thereof, non-ionic surfactants, and particularly ethoxylated fatty alcohols, preferably ethoxylated fatty alcohols with a lipophilic chain with a mean length between 10 and 14 carbon atoms and a hydrophilic chain containing on average 3 to 11 moles of ethylene oxide, being preferred. The function of the surfactant component is to solubilize or emulsify the hydrocarbons in the water.

To regulate its evaporation, the stripping composition can further comprise at least one evaporation-adjusting hygroscopic component selected from polyhydroxylated compounds, such as glycerine, propylene glycol, glucose, fructose, sucrose, sorbitol and combinations thereof, for example.

Included among the auxiliary components that can be comprised in the stripping compositions are components such as viscosity-adjusting agents, pH-adjusting agents, hydrotropes, preservatives, colorants, clouding agents, anti-foaming agents, perfumes and combinations thereof, for example.

In a first embodiment useful for stripping polyurethane graffiti, paints, enamels and varnishes, the stripping composition comprises 66 to 70% by weight of water, 18 to 22% by weight of limonene, 4 to 8% by weight of glycerine and 4 to 8% by weight of non-ionic surfactant consisting of ethoxylated fatty alcohol with a lipophilic chain with a mean length between 12 and 14 carbon atoms and a hydrophilic chain containing on average 11 moles of ethylene oxide.

In a second embodiment useful for stripping graffiti, acrylic paint and enamel, the stripping composition comprises 69 to 73% by weight of water, 18 to 22% by weight of orange essential oil, 1 to 5% by weight of glycerine and 4 to 8% by weight of non-ionic surfactant consisting of ethoxylated fatty alcohol with a lipophilic chain with a mean length between 12 and 14 carbon atoms and a hydrophilic chain containing on average 11 moles of ethylene oxide.

In a third embodiment useful for quickly stripping plastic and acrylic paints and enamels, the composition comprises 18 to 22% by weight of water, 58 to 62% by weight of limonene, 8 to 12% by weight of glycerine and 8 to 12% by weight of non-ionic surfactant consisting of ethoxylated fatty alcohol with a lipophilic chain with a mean length between 12 and 14 carbon atoms and a hydrophilic chain containing on average 11 moles of ethylene oxide.

In a fourth embodiment useful for quickly stripping graffiti, plastic and acrylic paints and enamels, the composition comprises 32 to 36% by weight of water, 58 to 62% by weight of orange essential oil, 1 to 5% by weight of glycerine and 1 to 5% by weight of non-ionic surfactant consisting of ethoxylated fatty alcohol with a lipophilic chain with a mean length of 10 carbon atoms and a hydrophilic chain containing on average 3 moles of ethylene oxide.

In a fifth embodiment useful for quickly stripping graffiti, plastic paints, enamels, and also useful for stripping polyurethane varnishes using a little more time, the composition comprises 74 to 76% by weight of water, 9 to 11 % by weight of limonene, 7 to 8% by weight of polypropylene glycol and 7 to 8% by weight of non-ionic surfactant consisting of ethoxylated fatty alcohol with a lipophilic chain with a mean length of 10 carbon atoms and a hydrophilic chain containing on average 3 moles of ethylene oxide.

The above-mentioned stripping composition can be prepared, for example, by means of a method comprising:
a) a first mixing step, performed at a temperature between 0°C and 90°C, for mixing the hydrocarbon with the surfactant component and alternatively with the additional component, for forming a first homogenous phase;
b) a second mixing step, performed at a temperature between 0°C and 90°C, for mixing water with the evaporation-adjusting component and alternatively with auxiliary additives for forming a second homogenous phase;
c) a third vigorous mixing step for mixing the first phase added to the second phase, or alternatively a mixing step for mixing the second phase added to the first phase, or alternatively a mixing step in which the first phase and the second phase are added to the mixing container simultaneously.
d) a cooling step if the preceding steps were performed at a temperature exceeding ambient temperature, simultaneously stirring and alternatively deaerating.
e) if needed, another step or additional steps for incorporating the rest of the auxiliary additives if there are still any left to be incorporated.

The resulting stripping composition can be packaged and labeled in a conventional manner for marketing.

The above-mentioned stripping composition may also be obtained from a precursor composition according to the present invention, comprising:
5% to 100% by weight of the solvent component, the solvent component being selected from non-aromatic apolar hydrocarbons with between 5 and 15 carbon atoms, the molecules of which do not have oxygen, nitrogen, sulfur or other polarizing atoms, and which have dielectric constants (K) less than 3;
0% to 50% by weight of the surfactant component;
0% to 50% by weight of the evaporation-adjusting hygroscopic component;
at least one auxiliary component in a weight percentage such that when present, the precursor composition is made up to 100%.

Preferably, the composition may comprise:
30% to 60% by weight of the solvent component;
20% to 35% by weight of the surfactant component;
20% to 35% by weight of the evaporation-adjusting hygroscopic component.

The solvent component, the surfactant component and the auxiliary component are those which were previously specified in relation to the stripping composition.

A method which comprises intimately mixing water and the precursor composition at a temperature between 0 and 90°C, for example by means of vigorously mixing the precursor composition added to the water, or alternatively by means of mixing the water onto the precursor composition, or alternatively by means of mixing in which the precursor composition and the water are added to the mixing container simultaneously, can be used for preparing the stripping composition from the precursor composition *"in situ".* The method will preferably be carried out at ambient temperature, although it can also be carried out at other temperatures up to a maximum of 90°C.

A precursor composition comprising 58-70% by weight of limonene, 15-21% by weight of glycerine and 15-21% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 1.7 to 2.7 parts by weight of water, can be used as a starting material for preparing a stripping composition of the type of the first above-mentioned stripping composition.

A precursor composition comprising 63-79% by weight of orange essential oil, 4-14% by weight of glycerine and 17-23% by weight of non-ionic surfactant consisting of ethoxylated fatty alcohol with a lipophilic chain with a mean length between 12 and 14 carbon atoms and a hydrophilic chain containing on average 11 moles of ethylene oxide, particularly useful for forming a stripping composition for graffiti, acrylic paint and enamel when mixed with 1.9 to 3.1 parts by weight of water, can be used as a starter material for preparing a stripping composition of the type of the second above-mentioned stripping composition.

A precursor composition comprising 72-78% by weight of limonene, 11-14% by weight of glycerine and 11-14% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 0.2 to 0.3 parts by weight of water, can be used as a starter material for preparing a stripping composition of the type of the third above-mentioned stripping composition.

A precursor composition comprising 86-96% by weight of orange essential oil, 2-7% by weight of glycerine and 2-7% by weight of non-ionic surfactant consisting of ethoxylated fatty alcohol with a lipophilic chain with a mean length of 10 carbon atoms and a hydrophilic chain containing on average 3 moles of ethylene oxide, useful for forming a stripping composition when mixed with 0.4 to 0.6 parts by weight of water, can be used as a starter material for preparing a stripping composition of the type of the fourth above-mentioned stripping composition.

Finally, a precursor composition comprising 40% by weight of limonene, 30% by weight of propylene glycol and 30% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 2.5 to 3.5 parts by weight of water, can be used as a starter material for preparing a stripping composition of the type of the fifth above-mentioned stripping composition.

As can be inferred from the foregoing, the stripping composition according to the present invention can be elaborated and marketed initially as a precursor composition that does not have stripping properties, but at the time of use water must be added for forming a dispersion, emulsion, gel or solution which does present the desired stripping properties and it is therefore applied on the painted surface.

### Embodiments of the Invention

Various non-limiting examples of compositions according to the present invention and their respective stripping performances are described below. To assess the paint and varnish removal performance of the compositions specified in the examples, a support surface (marble or galvanized steel in these examples, but it can be applied to any other support surfaces such as wood, plastics or other types of stone and metals) was painted with a brush. After painting, the paint or varnish was left to dry for 48 hours at ambient temperature. The stripping agent is deposited on the paint and is left to act for a previously established time, and after such time the paint or varnish was removed by gently rubbing with a fiber scouring pad and subsequently rinsing with water. The tested actuation times were 0 minutes, 5 minutes, 15 minutes and 30 minutes. The performance was evaluated using a scale ranging from the value 0, where no paint is removed, up to the value 5, where removal is total removal.

### Example 1:

A composition consisting of 68% water, 20% limonene, 6% glycerine and 6% non-ionic surfactant consisting of ethoxylated fatty alcohol, the lipophilic chain of which has a mean length between 12 and 14 carbon atoms and the hydrophilic chain of which contains on average 11 moles of ethylene oxide, was prepared.

The stripping properties of this composition with respect to various paints on marble as the support were tested following the above-described method for assessing paint and varnish removal performance, the performance at various application times being specified in Table 1.

**Table 1.- Stripping performance of the stripping composition of Example 1.**

| Paint or varnish | 0 minutes | 5 minutes | 15 minutes | 30 minutes |
|---|---|---|---|---|
| Graffiti | 0 | 4 | 5 | 5 |
| Acrylic paint | 0 | 3 | 5 | 5 |
| Enamel | 0 | 5 | 5 | 5 |
| Polyurethane varnish | 0 | 0 | 4 | 4 |

### Example 2:

A composition consisting of 71% water, 20% orange essential oil, 3% glycerine and 6% non-ionic surfactant consisting of ethoxylated fatty alcohol, the lipophilic chain of which has a mean length between 12 and 14 carbon atoms and the hydrophilic chain of which contains on average 11 moles of ethylene oxide, was prepared.

The stripping properties of this composition with respect to various paints on marble as the support were tested following the above-described method for assessing paint and varnish removal performance, the performance at various application times being specified in Table 2.

**Table 2.- Stripping performance of the stripping composition of Example 2.**

| Paint or varnish | 0 minutes | 5 minutes | 15 minutes | 30 minutes |
|---|---|---|---|---|
| Graffiti | 0 | 5 | 5 | 5 |
| Acrylic paint | 0 | 5 | 5 | 5 |
| Enamel | 0 | 0 | 5 | 5 |
| Polyurethane varnish | 0 | 1 | 1 | 1 |

This composition is suitable for graffiti, acrylic paint and enamel, but it is unsuitable for a polyurethane-based varnish.

### Example 3:

A composition consisting of 20% water, 60% limonene, 10% glycerine and 10% non-ionic surfactant consisting of ethoxylated fatty alcohol, the lipophilic chain of which has a mean length between 12 and 14 carbon atoms and the hydrophilic chain of which contains on average 11 moles of ethylene oxide, was prepared.

The stripping properties of this composition with respect to various paints on a galvanized steel plate as the support were tested following the above-described method for assessing paint and varnish removal performance, the performance at various application times being specified in Table 3.

**Table 3.- Stripping performance of the stripping composition of Example 3.**

| Paint or varnish | 0 minutes | 5 minutes | 15 minutes | 30 minutes |
|---|---|---|---|---|
| Plastic paint | 0 | 5 | 5 | 5 |
| Acrylic paint | 5 | 5 | 5 | 2 |
| Enamel | 5 | 5 | 5 | 4 |

This composition for acrylic paint and enamel has stripping properties from the moment it is applied, but its performance decreases if it is left to act for times exceeding 15 minutes. This phenomenon can be explained considering that there is an initial low concentration of water in this composition, and it is therefore sensitive to evaporation despite the elevated presence of glycerine. The consequence is deactivation and loss of performance observed 30 minutes after the application.

### Example 4:

A composition consisting of 34% water, 60% orange essential oil, 3% glycerine and 3% non-ionic surfactant consisting of ethoxylated fatty alcohol, the lipophilic chain of which has a mean length of 10 carbon atoms and the hydrophilic chain of which contains on average 3 moles of ethylene oxide, was prepared.

The stripping properties of this composition with respect to various paints on a galvanized steel plate as a support were tested following the above-described method for assessing paint and varnish removal performance, the performance at various application times being specified in Table 4.

**Table 4.- Stripping performance of the stripping composition of Example 4.**

| Paint or varnish | 0 minutes | 5 minutes | 15 minutes | 30 minutes |
|---|---|---|---|---|
| Graffiti | 0 | 5 | 5 | 5 |
| Plastic paint | 5 | 5 | 5 | 5 |
| Acrylic paint | 0 | 5 | 5 | 5 |
| Enamel | 0 | 5 | 5 | 5 |
| Polyurethane varnish | 0 | 0 | 4 | 5 |

### Example 5:

A precursor composition consisting of an anhydrous concentrate, the composition of which is 40% limonene, 30% propylene glycol and 30% non-ionic surfactant consisting of ethoxylated fatty alcohol, the lipophilic chain of which has a mean length between 12 and 14 carbon atoms and the hydrophilic chain of which contains on average 11 moles of ethylene oxide, was prepared.

To activate this anhydrous concentrate and to enable using it as a stripping agent, it is mixed with water at a proportion of 1 part concentrate with 3 parts water.

The stripping properties thereof in various paints on a galvanized steel plate as a support were tested, the performance at various application times being specified in Table 5.

**Table 5.- Stripping performance of the stripping composition of Example 5.**

| Paint or varnish | 0 minutes | 5 minutes | 15 minutes | 30 minutes |
|---|---|---|---|---|
| Graffiti | 0 | 5 | 5 | 5 |
| Acrylic paint | 0 | 4 | 5 | 5 |
| Enamel | 0 | 5 | 5 | 5 |
| Polyurethane varnish | 0 | 0 | 4 | 5 |

## Claims

1. Stripping composition for paints, varnishes and lacquers, comprising a solvent component and water, and optionally at least one additional component selected from surfactant components, evaporation-adjusting hygroscopic components, auxiliary components, and combinations thereof, **characterized in that** it comprises
5% to 85% by weight of the solvent component, the solvent component being selected from apolar hydrocarbons with between 5 and 15 carbon atoms, the molecules of which do not have oxygen, nitrogen, sulfur or other polarizing atoms, and which have dielectric constants (K) less than 3, aromatic hydrocarbons that are harmful to health being expressly excluded;
15% to 85% by weight of water;
0% to 50% by weight of the surfactant component;
0% to 15% by weight of the evaporation-adjusting hygroscopic component;
at least one auxiliary component in a weight percentage such that when present, the stripping composition is made up to 100%.

2. Stripping composition according to claim 1, **characterized in that** it comprises
15% to 70% by weight, preferably 30% to 70% by weight, of the solvent component;
30% to 85% by weight, preferably 30% to 70% by weight, of water;
2% to 15% by weight, preferably 5% to 15%, of the surfactant component;
2% to 12% by weight, preferably 5% to 10%, of the evaporation-adjusting hygroscopic component.

3. Stripping composition according to claim 1 or 2, **characterized in that** the solvent component is selected from saturated and unsaturated, cyclic and acyclic hydrocarbons, and combinations thereof.

4. Stripping composition according to claim 1 or 2, **characterized in that** the solvent component comprises at least one hydrocarbon selected from hydrocarbons with a hemiterpene, monoterpene and sesquiterpene structure.

5. Stripping composition according to claim 1 or 2, **characterized in that** the solvent component comprises at least one hydrocarbon selected from dipentene, limonene and combinations thereof.

6. Stripping composition according to claim 5, **characterized in that** the limonene is selected from pure limonene and limonene comprised in essential oils as the majority component.

7. Stripping composition according to one of claims 1 to 6, **characterized in that** it comprises a surfactant component selected from anionic surfactants, cationic surfactants, amphoteric surfactants and combinations thereof.

8. Stripping composition according to one of claims 1 to 6, **characterized in that** the surfactant component is selected from non-ionic surfactants.

9. Stripping composition according to one of claims 1 to 6, **characterized in that** the surfactant component is selected from ethoxylated fatty alcohols.

10. Stripping composition according to claim 9, **characterized in that** it comprises at least one ethoxylated fatty alcohol with a lipophilic chain with a mean length between 10 and 14 carbon atoms and a hydrophilic chain containing on average 3 to 11 moles of ethylene oxide.

11. Stripping composition according to one of the preceding claims, **characterized in that** it comprises at least one evaporation-adjusting hygroscopic component selected from polyhydroxylated compounds.

12. Stripping composition according to claim 11, **characterized in that** the evaporation-adjusting hygroscopic component is selected from glycerine, propylene glycol, glucose, fructose, sucrose, sorbitol and combinations thereof.

13. Stripping composition according to one of the preceding claims, **characterized in that** it comprises an auxiliary component selected from viscosity-adjusting agents, pH-adjusting agents, hydrotropes, preservatives, colorants, clouding agents, anti-foaming agents, perfumes and combinations thereof.

14. Stripping composition according to claim 1 or 2, **characterized in that** it comprises 66% to 70% by weight of water, 18% to 22% by weight of limonene, 4% to 8% by weight of glycerine and 4% to 8% by weight of non-ionic surfactant consisting of ethoxylated fatty alcohol with a lipophilic chain with a mean length between 12 and 14 carbon atoms and a hydrophilic chain containing on average 11 moles of ethylene oxide.

15. Stripping composition according to claim 1 or 2, **characterized in that** it comprises 69% to 73% by weight of water, 18% to 22% by weight of orange essential oil, 1 % to 5% by weight of glycerine and 4% to 8% by weight of non-ionic surfactant consisting of ethoxylated fatty alcohol with a lipophilic chain with a mean length between 12 and 14 carbon atoms and a hydrophilic chain containing on average 11 moles of ethylene oxide.

16. Stripping composition according to claim 1 or 2, **characterized in that** it comprises 18% to 22% by weight of water, 58% to 62% by weight of limonene, 8% to 12% by weight of glycerine and 8% to 12% by weight of non-ionic surfactant consisting of ethoxylated fatty alcohol with a lipophilic chain with a mean length between 12 and 14 carbon atoms and a hydrophilic chain containing on average 11 moles of ethylene oxide.

17. Stripping composition according to claim 1 or 2, **characterized in that** it comprises 32% to 36% by weight of water, 58% to 62% by weight of orange essential oil, 1 % to 5% by weight of glycerine and 1 % to 5% by weight of non-ionic surfactant consisting of ethoxylated fatty alcohol with a lipophilic chain with a mean length of 10 carbon atoms and a hydrophilic chain containing on average 3 moles of ethylene oxide.

18. Composition according to claim 1 or 2, **characterized in that** it comprises 74 to 76% by weight of water, 9 to 11 % by weight of limonene, 7 to 8% by weight of polypropylene glycol and 7 to 8% by weight of non-ionic surfactant consisting of ethoxylated fatty alcohol with a lipophilic chain with a mean length of 10 carbon atoms and a hydrophilic chain containing on average 3 moles of ethylene oxide.

19. Precursor composition of the stripping composition defined in claim 1, **characterized in that** it comprises
5% to 100% by weight of the solvent component, the solvent component being selected from non-aromatic apolar hydrocarbons with between 5 and 15 carbon atoms, the molecules of which do not have oxygen, nitrogen, sulfur or other polarizing atoms, and which have dielectric constants (K) less than 3;
0% to 50% by weight of the surfactant component;
0% to 50% by weight of the evaporation-adjusting hygroscopic component;
at least one auxiliary component in a weight percentage such that when present, the precursor composition is made up to 100%.

20. Precursor composition according to claim 19, **characterized in that**
30% to 60% by weight of the solvent component;
20% to 35% by weight of the surfactant component;
20% to 35% by weight of the evaporation-adjusting hygroscopic component.

21. Precursor composition according to claim 19 or 20, **characterized in that** the solvent component is selected from saturated and unsaturated, cyclic and acyclic hydrocarbons, and combinations thereof.

22. Precursor composition according to claim 19 or 20, **characterized in that** the solvent component comprises at least one hydrocarbon selected from hydrocarbons with a hemiterpene, monoterpene and sesquiterpene structure.

23. Precursor composition according to claim 19 or 20, **characterized in that** the solvent component comprises at least one hydrocarbon selected from dipentene, limonene and combinations thereof.

24. Precursor composition according to claim 23, **characterized in that** the limonene is selected from pure limonene and limonene comprised in essential oils as the majority component.

25. Precursor composition according to one of claims 19 to 24, **characterized in that** it comprises a surfactant component selected from anionic surfactants, cationic surfactants, amphoteric surfactants and combinations thereof.

26. Precursor composition according to one of claims 19 to 24, **characterized in that** the surfactant component is selected from non-ionic surfactants.

27. Precursor composition according to one of claims 19 to 24, **characterized in that** the surfactant component is selected from ethoxylated fatty alcohols.

28. Precursor composition according to claim 27, **characterized in that** it comprises at least one ethoxylated fatty alcohol with a lipophilic chain with a mean length between 10 and 14 carbon atoms and a hydrophilic chain containing on average 3 to 11 moles of ethylene oxide.

29. Precursor composition according to one of claims 18 to 27, **characterized in that** it comprises at least one evaporation-adjusting hygroscopic component selected from polyhydroxylated compounds.

30. Precursor composition according to claim 29, **characterized in that** the evaporation-adjusting hygroscopic component is selected from glycerine, propylene glycol, glucose, fructose, sucrose, sorbitol and combinations thereof in ethoxylated form.

31. Precursor composition according to one of claims 19-30, **characterized in that** it comprises an auxiliary component selected from viscosity-adjusting agents, pH-adjusting agents, hydrotropes, preservatives, colorants, clouding agents, anti-foaming agents, perfumes and combinations thereof.

32. Precursor composition according to claim 19 or 20, **characterized in that** it comprises 58% to 70% by weight of limonene, 15% to 21% by weight of glycerine and 15% to 21% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 1.7 to 2.7 parts by weight of water.

33. Precursor composition according to claim 19 or 20, **characterized in that** it comprises 63% to 79% by weight of orange essential oil, 4% to 14% by weight of glycerine and 17% to 23% by weight of non-ionic surfactant consisting of ethoxylated fatty alcohol with a lipophilic chain with a mean length between 12 and 14 carbon atoms and a hydrophilic chain containing on average 11 moles of ethylene oxide, particularly useful for forming a stripping composition for graffiti, acrylic paint and enamel when mixed with 1.9 to 3.1 parts by weight of water.

34. Precursor composition according to claim 19 or 20, **characterized in that** it comprises 72% to 78% by weight of limonene, 11% to 14% by weight of glycerine and 11% to 14% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 0.2 to 0.3 parts by weight of water.

35. Precursor composition according to claim 19 or 20, **characterized in that** it comprises 86% to 96% by weight of orange essential oil, 2% to 7% by weight of glycerine and 2% to 7% by weight of non-ionic surfactant consisting of ethoxylated fatty alcohol with a lipophilic chain with a mean length of 10 carbon atoms and a hydrophilic chain containing on average 3 moles of ethylene oxide, useful for forming a stripping composition when mixed with 0.4 to 0.6 parts by weight of water.

36. Precursor composition according to claim 19 or 20, **characterized in that** it comprises 40% by weight of limonene, 30% by weight of propylene glycol and 30% by weight of non-ionic surfactant consisting of ethoxylated fatty alcohol with a lipophilic chain with a mean length between 12 and 14 carbon atoms and a hydrophilic chain containing on average 11 moles of ethylene oxide, useful for forming a stripping composition when mixed with 2.5 to 3.5 parts by weight of water.

37. Method for preparing *"in situ"* the stripping composition defined in claims 1 to 18, **characterized in that** it comprises intimately mixing water and the precursor composition defined in any one of claims 19 to 36, at a temperature between 0 and 90°C.

38. Use of the stripping composition according to any one of claims 1 to 18 for stripping layers selected from layers of paints, layers of varnishes, layers of lacquers, water-based layers, and combinations thereof.
